# FASCICULE DE BREVET EUROPEEN

(11) **EP 0 811 227 B1**
(45) Date de publication et mention de la délivrance du brevet: **05.11.2003**
(21) Numéro de dépôt: 96942409.2
(22) Date de dépôt: 13.12.1996
(51) Int. Cl.: G11B 7/24, G11B 7/09

(54) **SUPPORT D'ENREGISTREMENT/LECTURE OPTIQUE D'INFORMATIONS ET PROCEDE D'ENREGISTREMENT**
TRÄGER FÜR OPTISCHE INFORMATIONSAUFZEICHNUNG/-WIEDERGABE UND AUFZEICHNUNGSVERFAHREN
OPTICAL DATA RECORDING/READING MEDIUM AND RECORDING METHOD

(30) Priorité: 21.12.1995 FR 9515256
(43) Date de publication de la demande: 10.12.1997
(73) Titulaire: THOMSON CSF, 75008 Paris (FR)
(72) Inventeur: LE CARVENNEC, François, Thomson-CFS S.C.P.I., F-94117 Arcueil Cédex (FR); HUIGNARD, Jean-Pierre, Thomson-CSF S.C.P.I., F-94117 Arcueil Cédex (FR); PUECH, Claude, Thomson-CSF S.C.P.I., F-94117 Arcueil Cédex (FR)
(86) Numéro de dépôt international: FR9602005
(87) Numéro de publication internationale: WO97023872

(56) Documents cités:
- EP-A- 0 461 956
- EP-A- 0 496 132
- EP-A- 0 517 491
- EP-A- 0 713 217

## Description

L'invention concerne un support d'enregistrement/lecture optique d'informations et plus particulièrement un support permettant d'enregistrer des informations selon différents plans dans l'épaisseur du support.

On connaît des systèmes dans la technique permettant d'enregistrer dans l'épaisseur d'un matériau, selon différentes strates, différentes séries d'informations (voir par exemple le brevet français 90 07284). Cette technique a pour but d'augmenter les capacités de stockage des systèmes optiques.

Les supports optiques actuellement utilisés se présentent sous la forme de disques tournants autour d'un axe et les informations sont enregistrées sur le disque sous forme de pistes concentriques ou en spirales. Dans l'enregistrement en épaisseur différents plans (ou strates) internes aux disques sont destinés à contenir chacun des pistes d'informations.

L'enregistrement et la lecture dans les différents plans du disque se fait à l'aide d'un faisceau laser et d'une optique de focalisation de ce faisceau. Cette optique doit être apte à former des taches de focalisation à plusieurs profondeurs au-dessous de la surface du disque. L'optique de focalisation peut également se déplacer radialement par rapport au disque pour assurer l'enregistrement et la lecture des différentes pistes de chaque plan du disque.

Pour l'enregistrement d'informations, on utilise un stylet optique d'enregistrement comportant par exemple une optique déplaçable verticalement par rapport à la surface du disque.

Pour cela on utilise une optique présentant une profondeur de champ très faible de façon que la focalisation ne soit efficace que dans une zone très limitée en profondeur.

On superpose ainsi plusieurs strates d'informations en prévoyant des moyens pour déplacer le plan focal de l'optique de lecture ou d'écriture de manière à permettre une focalisation sur une strate (un plan) choisie parmi plusieurs strates empilées.

L'optique est déplaçable aussi radialement par rapport à l'axe du disque. De cette manière, toute la surface utile du disque peut être balayée par le faisceau laser d'enregistrement, et cela pour chacune des strates d'informations.

Dans une technique connue, pour régler la focalisation du faisceau et pour permettre au point de focalisation de suivre une piste particulière dans une strate du disque, on prévoit, à la surface du disque ou sur une face principale de la couche d'enregistrement, des éléments d'informations de guidage. Lors d'un enregistrement ou d'une lecture, l'optique est focalisée tout d'abord sur ces éléments d'informations de façon à réaliser le réglage de focalisation et le suivi de piste, puis l'optique est déplacée d'une distance déterminée pour que la focalisation se fasse dans la strate à enregistrer ou à lire. L'inconvénient d'un tel système réside dans le fait que l'optique présente une inertie telle que le déplacement de l'optique n'est pas immédiat. Le temps mis pour déplacer l'optique à partir de la surface du disque vers la strate à enregistrer ou à lire a pour conséquence de diminuer la densité des informations contenues dans chaque strate. De plus, il faut que d'une utilisation à une autre utilisation, les déplacements soient rigoureusement identiques.

Selon une autre technique telle que décrite notamment dans la demande de brevet européen EP-A-0 496 132, on peut prévoir un premier faisceau qui se focalise sur une surface de référence du disque et au moins un deuxième faisceau qui se focalise dans l'épaisseur du disque. La surface de référence comporte alors des informations de suivi de piste et de focalisation et le premier faisceau est utilisé pour la focalisation et le suivi de piste du système. Le deuxième faisceau est lié au premier faisceau et sert à l'enregistrement ou la lecture dans l'épaisseur du disque. L'inconvénient d'un tel système est que la reproductibilité des positions des focalisations des deux faisceaux n'est pas certaine. Par exemple, les angles d'incidence des faisceaux sur le disque peuvent varier ce qui veut dire que d'une utilisation à une autre il ne doit pas se produire d'inclinaison relative du disque par rapport à la tête optique qui émet les faisceaux (tilt) pour éviter des erreurs de parallaxe.

L'invention a pour objet de résoudre ces problèmes.

L'invention concerne donc un support d'enregistrement/lecture optique d'informations, tel que défini dans les revendications 1 à 9.

Elle concerne aussi un procédé d'enregistrement d'informations de préformat pour un tel support, tel que défini dans les revendications 10 et 11.

Les différents objets et caractéristiques de l'invention apparaîtront plus clairement dans la description qui va suivre et dans les figures annexées qui représentent :
- la figure 1, un exemple de structure de support d'enregistrement auquel est appliqué l'invention ;
- les figures 2a et 2b, un exemple de réalisation du support d'enregistrement selon l'invention ;
- les figures 3a et 3b, une variante de réalisation du support d'enregistrement selon l'invention.

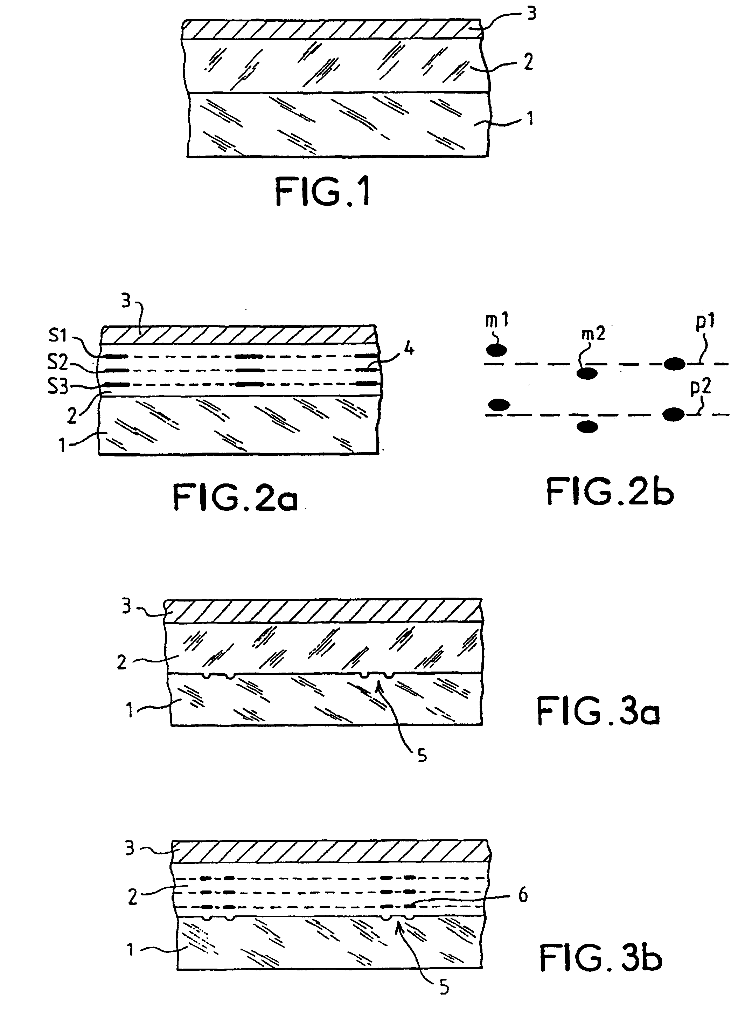

Le support d'enregistrement auquel est appliqué l'invention a de préférence une structure telle que représentée en figure 1. II comporte un substrat transparent 1, qui porte sur l'une de ces faces une couche 2 photosensible ou thermosensible et qui permet, à partir d'un seuil d'induire, en épaisseur une variation localisée (réversible ou non) de l'indice de réfraction. La couche 2 peut être recouverte par un vernis protecteur 3.

Selon l'invention, comme représenté en figure 2a, la couche 2 comporte selon différents plans S1, S2, S3 contenus dans son épaisseur des éléments d'information de guidage 4 appelés également "drapeaux de préformat". Ces éléments ont des positions qui correspondent les unes aux autres dans les différentes strates. Ces drapeaux peuvent contenir également des informations d'adressage.

Lorsqu'on veut écrire ou lire dans une strate, l'optique de focalisation est focalisée sur des éléments de guidage de la strate choisie et le système de guidage du faisceau se règle également sur ces éléments. L'enregistrement ou la lecture peut être réalisé immédiatement après ce réglage sans attendre le déplacement de l'optique mentionné précédemment.

La figure 2b représente un exemple de pistes d'une strate du support de la figure 2a. Ces pistes sont vues en vue de dessus. Les éléments d'informations sont disposées de façon à réaliser un préformat dit "préformat échantillonné" selon lequel des drapeaux sont disposés de place en place selon le trajet de la piste. Entre deux drapeaux consécutifs, un support d'enregistrement non enregistré ne comporte aucune marque ni information. Le support se déplace sous le faisceau d'enregistrement (ou de lecture) selon la trajectoire qui lui a été donnée jusqu'à rencontrer le drapeau suivant. Lorsque le support d'enregistrement est un disque, celui-ci tourne sous le faisceau d'enregistrement ou de lecture. A chaque passage d'un drapeau, la position radiale ainsi que la focalisation de l'optique de focalisation sont recalées. Ensuite, le disque continue à tourner sans réglage de suivi de piste jusqu'au drapeau suivant.

La figure 2b représente deux drapeaux de deux pistes différentes p1, p2. Chaque drapeau possède au moins deux marques m1, m2 situées de part et d'autre de la piste et des dispositifs connus dans la technique savent réaliser un suivi de piste à l'aide de marques ainsi disposées.

La figure 3a représente une variante de réalisation d'un support d'enregistrement dans lequel la couche transparente 2 servant à l'enregistrement possède des drapeaux de préformats sur l'une de ses faces.

Ces drapeaux sont réalisés selon l'exemple de la figure 3a, sous la forme de reliefs 5. Ces reliefs sont ensuite utilisés comme référence pour la réalisation des préformats 6 des différentes strates, soit en usine, soit sur l'enregistreur/lecteur de l'utilisateur qui peut ainsi préformater lui-même son support d'enregistrement.

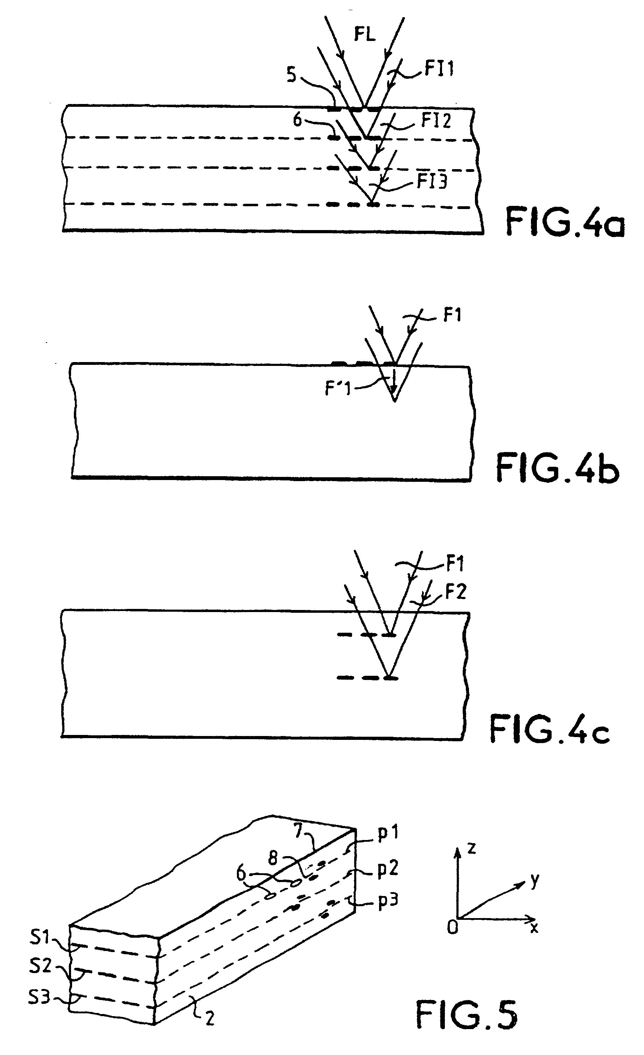

Le préformatage des différentes strates d'un support d'enregistrement à partir d'un préformatage déjà réalisé sur une face du support peut se faire, comme représenté en figure 4a, à l'aide d'au moins deux faisceaux :
un faisceau de lecture FL lit les informations de préformatage déjà enregistrées ce qui permet de guider la tête optique ;
- un faisceau d'inscription FI1 focalisé sur une strate du support permet d'inscrire les informations de guidage. Leur inscription peut être déclenchée par la lecture des informations de préformatage lues sur la face du support.

En ce qui concerne la focalisation, le faisceau FL a son point de focalisation situé sur la face du support d'enregistrement. La distance entre les points de focalisation des faisceaux FL et FI1 est maintenue constante ce qui permet d'assurer que le plan de la strate sera parallèle à la face du support d'enregistrement.

Selon la figure 4a, on prévoit que plusieurs faisceaux d'inscription FI1, FI2, FI3 sont asservis au faisceau de lecture FL de façon à préformater plusieurs strates en même temps.

Le préformatage peut être réalisé à l'aide d'un seul faisceau F1 (figure 4b) qui détecte les informations de préformatage déjà inscrites sur une face du disque et dont le point de focalisation est déplacé de la face du disque vers l'intérieur du disque d'une profondeur déterminée pour préformater une strate. Le préformatage des autres strates se fera de la même façon.

Selon l'invention, on prévoit également de préformater différentes strates d'un support d'enregistrement en même temps sans utilisation du préformatage déjà réalisé. Comme réalisé en figure 4c, plusieurs faisceaux (2 par exemple) F1, F2 focalisés selon deux plans de strates différents et commandés en même temps permettent de préformater ces strates.

L'invention concerne donc également un support d'enregistrement comportant des informations de préformat 5 sur une face de la couche photosensible (par exemple en relief) ainsi que des informations de préformats 6. Les informations 6 correspondent aux informations de préformats 5, et sont disposées dans les différentes strates à enregistrer. Les informations de préformats 5 sont réalisées sous la forme de variations locales d'indices de réfraction.

Le support d'enregistrement selon l'invention peut comporter outre les informations de guidage, des informations de données enregistrées dans une ou plusieurs strates.

En se reportant à la figure 5, on va décrire une variante de l'invention selon laquelle on prévoit, pour chaque plan d'enregistrement situé dans l'épaisseur du support, des marques de focalisation situées de part et d'autre de ce plan. De préférence, pour chaque plan d'enregistrement on a au moins deux marques 7, 8 situées dans un plan contenant une piste à enregistrer ou à lire (ou une portion de piste) et perpendiculaire au plan d'enregistrement. Les deux marques sont à une même distance par rapport au plan d'enregistrement.

Sur la figure 5, on a représenté plusieurs plans d'enregistrement S1, S2, S3 à l'intérieur d'un support 2. Ces plans sont parallèles à un plan de référence xOy. Pour simplifier, on représente dans ces plans des pistes p1, p2; p3 rectiligne et parallèles à l'axe Oy. On a représenté les informations de préformat 6. Les marques de focalisation 7, 8 de la piste p1 sont situées dans un plan parallèle au plan yOz (perpendiculaire au plan xOy) et contenant la piste.

Elles sont à égale distance de la piste p1. Elles sont décalées l'une par rapport à l'autre selon la direction Oy de déplacement de la piste. Lors du réglage de focalisation pour une lecture ou une inscription de la piste p1, le faisceau de lecture ou d'inscription sera focalisé lorsque les marques 7 et 8 réfléchiront et/ou diffracteront la même quantité de lumière d'un faisceau de réglage de focalisation vers un système de détection optique. En cas de défocalisation, ces quantités de lumière sont différentes et le système de détection permettra d'évaluer la valeur et le sens de la défocalisation.

L'invention a été décrite sous la forme générale d'un support d'enregistrement. Une forme particulièrement préférentielle est réalisée sous forme d'un disque.

## Revendications

1. Support d'enregistrement/lecture optique d'informations comportant au moins une couche transparente (2) permettant d'enregistrer ou de lire des informations dans différentes strates (S1 à S3) réparties selon l'épaisseur de ladite couche transparente, **caractérisé en ce que** chaque strate comporte une ou plusieurs informations de guidage (4 ;6) pré-enregistrées formant un préformat pour assurer des fonctions de suivi de piste et/ou de focalisation, et/ou de synchronisation, et/ou d'adressage dans ladite strate lors de l'enregistrement d'informations de données dans ladite strate.

2. Support selon la revendication 1 **caractérisé en ce que** les informations de guidage pré-enregistrées de chaque strate se présentent sous forme d'un sillon de guidage à variation d'indice.

3. Support selon la revendication 1, **caractérisé en ce que** les informations de guidage pré-enregistrées de chaque strate sont inscrites le long de chaque piste à intervalles réguliers.

4. Support selon la revendication 3, **caractérisé en ce que** chaque information de guidage comporte au moins deux marques (m1, m2) situées de part et d'autre d'une piste dans le plan de la strate correspondante.

5. Support selon l'une des revendications 1 ou 3, **caractérisé en ce que** chaque information de guidage comporte de part et d'autre du plan de chaque strate, dans un plan perpendiculaire au plan de strate, deux marques de focalisation (7, 8) pré-enregistrées.

6. Support selon la revendication 5, **caractérisé en ce que** lesdites deux marques de focalisation (7, 8) sont à une même distance du plan de strate et sont décalées l'une par rapport à l'autre selon une direction d'enregistrement du support d'enregistrement.

7. Support selon l'une quelconque des revendications 1 à 6, **caractérisé en ce que** des informations de guidage pré-enregistrées (5) sont imprimées sur une face principale du support d'enregistrement.

8. Support selon la revendication 7, **caractérisé en ce que** les informations de guidage (4;6) dans chaque strate correspondent aux informations de guidage imprimées (5).

9. Support selon l'une quelconque des revendication 1 à 8, **caractérisé en ce que**, le support étant en matériau à variation d'indice photoinduite, les informations de guidage pré-enregistrées et les informations de données sont enregistrées sous forme de variations locales d'indices photoinduites ou thermoinduites dans les différentes strates.

10. Procédé d'enregistrement d'informations de préformat pour un support d'enregistrement/lecture optique d'informations selon l'une des revendications 7 ou 8, **caractérisé en ce qu'**il consiste à :
- pré-imprimer sur une face principale du support des informations de guidage (5) ;
- lire lesdites informations de guidage pré-imprimées (5) par un faisceau de lecture (FL) ;
- inscrire lesdites informations de guidage (4 ;6) des préformats par au moins un faisceau d'inscription (FI1) asservi en position au faisceau de lecture (FL), lesdites informations de préformat correspondant aux informations pré-imprimées lues par le faisceau de lecture.

11. Procédé selon la revendication 10, **caractérisé en ce qu'**on utilise plusieurs faisceaux d'inscription (F1, F2) focalisés dans des plans différents du support et commandés simultanément pour inscrire des informations de préformatage dans les différentes strates du support.

## Patentansprüche

1. Informationsträger mit optischer Aufzeichnung und Wiedergabe von Informationen in mindestens einer transparenten Schicht (2), die Informationen in verschiedenen Ebenen (S1 bis S3) verteilt über die Dicke der transparenten Schicht zu schreiben oder auszulesen erlaubt, **dadurch gekennzeichnet, daß** jede Ebene eine oder mehrere Leitinformationen (4; 6) enthält, die vorab aufgezeichnet wurden und eine Vorformatierung bilden, um Spur-Verfolgungsinfunktionen und/oder Fokussierfunktionen und/oder Synchronisationsfunktionen und/oder Adressierfunktionen in der Ebene bei der Aufzeichnung von Daten in dieser Ebene zu erfüllen.

2. Träger nach Anspruch 1, **dadurch gekennzeichnet, daß** die vorab aufgezeichneten Leitinformationen jeder Ebene in Form einer Leitrinne in Form einer Brechungsindexvariation vorliegen.

3. Träger nach Anspruch 1, **dadurch gekennzeichnet, daß** die Leitinformationen, die in jeder Ebene vorab eingetragen sind, entlang jeder Spur in regelmäßigen Abständen eingeschrieben sind.

4. Träger nach Anspruch 3, **dadurch gekennzeichnet, daß** jede Leitinformation mindestens zwei Marken (m1, m2) besitzt, die sich zu beiden Seiten der Spur in der Ebene der entsprechenden Ebene befinden.

5. Träger nach einem der Ansprüche 1 und 3, **dadurch gekennzeichnet, daß** jede Leitinformation zu beiden Seiten jeder Ebene in einer Fläche senkrecht zu der Ebene zwei vorab eingeschriebene Fokussiermarken (7, 8) enthält.

6. Träger nach Anspruch 5, **dadurch gekennzeichnet, daß** die beiden Fokussiermarken (7, 8) sich in einem gleichen Abstand von der Ebene und gegenseitig in Richtung der Aufzeichnungsrichtung des Trägers versetzt befinden.

7. Träger nach einem beliebigen der Ansprüche 1 bis 6, **dadurch gekennzeichnet, daß** vorab aufgezeichnete Leitinformationen (5) auf eine Hauptseite des Aufzeichnungsträgers aufgedruckt sind.

8. Träger nach Anspruch 7, **dadurch gekennzeichnet, daß** die Leitinformationen (4; 6) in jeder Schicht den aufgedruckten Leitinformationen (5) entsprechen.

9. Träger nach einem beliebigen der Ansprüche 1 bis 8, **dadurch gekennzeichnet, daß** der Träger aus einem Material mit lichtinduziertem Wechsel des Brechungsindex besteht und die vorab aufgezeichneten Leitinformationen und die Dateninformationen in Form von lokalen licht- oder wärmeinduzierten Veränderungen in den verschiedenen Ebenen aufgezeichnet werden.

10. Verfahren zum Aufzeichnen von Vor-Formatierungsinformationen auf einem Aufzeichnungsträger mit optischer Aufzeichnung und Wiedergabe von Informationen nach einem der Ansprüche 7 und 8, **dadurch gekennzeichnet, daß** es darin besteht,
- auf einer Haupt-Außenseite des Trägers Leitinformationen (5) vorab aufzudrucken,
- die vorab aufgedruckten Leitinformationen (5) mit einem Lesestrahl (FL) zu lesen,
- die Leitinformationen (4; 6) der Vorformatierung mittels mindestens eines Schreibstrahls (FI1) zu schreiben, dessen Position der des Lesestrahls (FL) nachgeregelt ist, wobei die Vor-Formatierungsinformationen den aufgedruckten und vom Lesestrahl gelesenen Informationen entsprechen.

11. Verfahren nach Anspruch 10, **dadurch gekennzeichnet, daß** man mehrere Schreibstrahlen (F1, F2) verwendet, die je auf andere Ebenen des Trägers fokussiert sind und gemeinsam gesteuert werden, um Vor-Formatierungsinformationen in die verschiedenen Ebenen des Trägers einzutragen.

## Claims

1. Optical information recording/reading medium including at least one transparent layer (2) making it possible to record or read information in various strata (S1 to S3) distributed through the thickness of the said transparent layer, **characterized in that** each stratum includes one or more prerecorded guidance information items (4;6) forming a preformat for carrying out functions of tracking and/or focusing, and/or synchronization, and/or addressing in the said stratum during the recording of data information items in the said stratum.

2. Medium according to Claim 1, **characterized in that** the prerecorded guidance information items of each stratum take the form of an index-variation guidance groove.

3. Medium according to Claim 1, **characterized in that** the prerecorded guidance information items of each stratum are registered along each track at regular intervals.

4. Medium according to Claim 3, **characterized in that** each guidance information item includes at least two marks (m1, m2) situated on either side of a track in the plane of the corresponding stratum.

5. Medium according to one of Claims 1 or 3, **characterized in that** each guidance information item includes on either side of the plane of each stratum,
in a plane perpendicular to the stratum plane, two prerecorded focusing marks (7, 8).

6. Medium according to Claim 5, **characterized in that** the said two focusing marks (7, 8) are the same distance from the stratum plane and are offset one with respect to the other in a recording direction of the recording medium.

7. Medium according to any one of Claims 1 to 6, **characterized in that** prerecorded guidance information items (5) are printed on a principal face of the recording medium.

8. Medium according to Claim 7, **characterized in that** the guidance information items (4;6) in each stratum correspond to the printed guidance information items (5).

9. Medium according to any one of Claims 1 to 8, **characterized in that**, the medium being made of a material with photoinduced index variation, the prerecorded guidance information items and the data information items are recorded in the form of local index variations photoinduced or thermoinduced in the various strata.

10. Process for recording preformat information items for an optical information recording/reading medium according to one of Claims 7 or 8, **characterized in that** it consists in:
- preprinting guidance information items (5) on a principal face of the medium;
- reading said preprinted guidance information items (5) with a reading beam (FL);
- registering the said guidance information items (4;6) for the preformats with at least one registering beam (F11) positionally tied to the reading beam (FL), the said preformat information items corresponding to the preprinted information items read by the reading beam.

11. Process according to Claim 10, **characterized in that** use is made of several registering beams (F1, F2) focused in different planes of the medium and controlled simultaneously so as to register preformatting information items in the various strata of the medium.
